# EUROPEAN PATENT APPLICATION

(11) **EP 1 439 255 A1**
(43) Date of publication of application: **21.07.2004**
(21) Application number: 04000121.6
(22) Date of filing: 07.01.2004
(51) Int. Cl.: D06F 37/40

(54) **Washing machine**

(30) Priority: 16.01.2003 KR 2003003029
(71) Applicant: LG ELECTRONICS INC., Seoul (KR)
(72) Inventor: Kim, Young-Ho, Seoul (KR); Kim, Dong-Won, Gyeonggi-Do (KR); Kim, Joon-Woo, Gyeonggi-Do (KR)
(74) Representative: Gille Hrabal Struck Neidlein Prop Roos

(57) **Abstract**

A washing machine comprises a washing machine casing; an outer tub disposed in the casing, for containing water therein; an inner tub rotatably disposed in the outer tub, for containing laundry therein; an induction motor for generating a rotational force; and a rotation transmission means for transmitting a rotational force of the induction motor to the inner tub with a rotational speed decelerated from a rotational speed of the induction motor in laundering operation, and with a rotational speed identical to the rotational speed of the induction motor in dehydrating operation.

## Description

### BACKGROUND OF THE INVENTION

### 1. Field of the Invention

The present invention relates to a washing machine, and in particular to a washing machine capable of lowering production cost and noise, by using an induction motor as a driving motor for rotating a tub.

### 2. Description of the Related Art

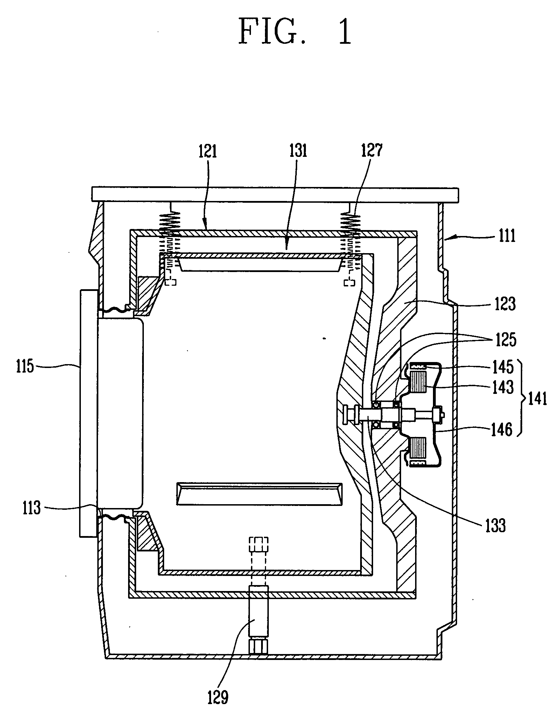

Fig.1 is a sectional view illustrating a conventional washing machine. As depicted in Fig.1, a conventional washing machine includes a casing 111 in which a door 115 is installed at an opening portion 113 on the front; an outer tub 121 disposed inside the casing 111, for containing water; an inner tub 131 installed inside the outer tub 121 of which a rotary shaft 133 is arranged horizontally, for containing laundry therein; a driving motor 141 connected with the rotary shaft 133 of the inner tub 131, for rotating the inner tub 131; a spring 127 and a damper 129 respectively arranged on the upper and lower portions of the outer tub 121 in order to support and buff the outer tub 121.

The rotary shaft 133 of the inner tub 131 is rotatably supported by at least one bearing 125 installed in the center of a support plate 123 arranged on the rear of the outer tub 121.

The driving motor 141 includes a stator 143 fixed to the support plate 123 of the outer tub 121; a rotor 145 comprising a permanent magnet disposed around the stator 143 with a certain air gap and rotated by mutual electromagnetic with the stator 143; and a rotor link 146 for connecting the rotor 145 with the rotary shaft 133 so as to transmit a rotational force of the rotor 145 to the rotary shaft 133 of the inner tub 131.

In that construction, when the driving motor 141 is operated, the rotational force of the driving motor 141 is transmitted to the inner tub 131 through the rotary shaft 133, and accordingly the washing machine performs laundering and dehydrating operations of the laundry in the inner tub 131 by the rotation of the inner tub 131.

In the conventional washing machine, a brushless DC motor capable of adjusting a speed for itself or a universal motor connected with the rotary shaft of the inner tub by a belt-pulley transmission mechanism are used as the driving motor for rotating the inner tub. However, in case of the brushless DC motor, because a unit cost is high, a production cost of a washing machine may rise, and in case of the universal motor, vibration and noise may be great in the structural aspect.

### SUMMARY OF THE INVENTION

Therefore, an object of the present invention is to provide a washing machine capable of lowering production cost and noise, by using an induction motor as a driving motor for rotating a tub and constructing an optimum rotational force transmitting mechanism.

To achieve these and in accordance with the purpose of the present invention, it can be characterized and is comprised of a washing machine in accordance with the present invention includes a washing machine casing; an outer tub disposed in the casing, for containing water therein; an inner tub rotatably disposed in the outer tub, for containing laundry therein; an induction motor for generating a rotational force; and a rotation transmission means for transmitting a rotational force of the induction motor to the inner tub with a rotational speed decelerated from a rotational speed of the induction motor in laundering operation, and with a rotational speed identical to the rotational speed of the induction motor in dehydrating operation.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
Fig.1 is a sectional view illustrating the conventional washing machine;
Fig.2 is a sectional view illustrating a washing machine in accordance with a first embodiment of the present invention;
Fig.3 is an enlarged-sectional view illustrating a driving motor and a rotational force transmitting mechanism of the washing machine in accordance with the first embodiment of the present invention;
Fig.4 is a sectional view illustrating a washing machine in accordance with a second embodiment of the present invention;
Fig.5 is an enlarged-sectional view illustrating a driving motor and a rotational force transmitting mechanism of the washing machine in accordance with the second embodiment of the present invention;
Fig.6 is a sectional view illustrating a washing machine in accordance with a third embodiment of the present invention;
Fig.7 is an enlarged-sectional view illustrating a driving motor and a rotational force transmitting mechanism of the washing machine in accordance with the third embodiment of the present invention;
Fig.8 is a sectional view illustrating a washing machine in accordance with a fourth embodiment of the present invention;
Fig.9 is an enlarged-sectional view illustrating a driving motor and a rotational force transmitting mechanism of the washing machine in accordance with the fourth embodiment of the present invention; and
Fig.10 is a sectional view taken along a line X-X in Fig.9.

### DETAILED DESCRIPTION OF THE PREFERRED EMBODIMENT

The preferred embodiment of the present invention will be described with reference to accompanying drawings.

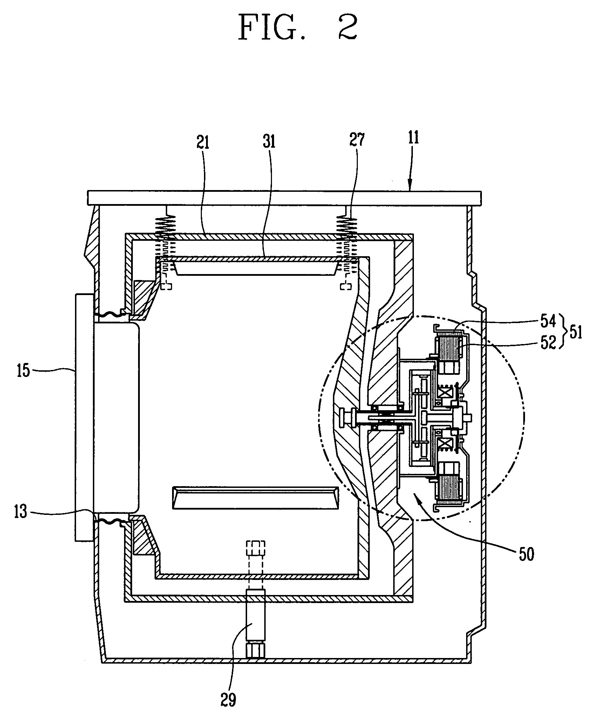

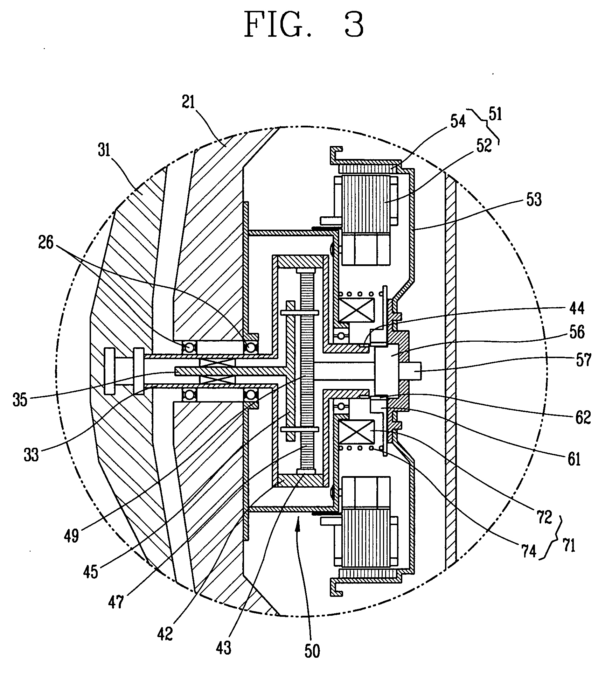

Hereinafter, a washing machine in accordance with a first embodiment of the present invention will be described with reference to Figs.2 and 3.

As depicted in Fig.2, the washing machine in accordance with the first embodiment of the present invention includes a casing 11 in which an internal receiving space is formed and a door 15 is installed at an opening portion 13 on the front; an outer tub 21 for containing wash water suspended and supported by a spring 27 and a damper 29 in the casing 11; an inner tub 31 for containing the laundry therein rotatably disposed in the outer tub 21; an induction motor 51 which is disposed in the casing 11 and consists of a stator 52 and a rotor 54 disposed to maintain a certain air gap from an outer circumference of the stator 52, and generate a rotational force for rotating the inner tub 31 by mutual electromagnetic operation with the stator 52; a rotation transmission means 50 for transmitting a rotational force of the induction motor 51 to the inner tub 31 with a rotational speed decelerated from a rotational speed of the induction motor 51 in the laundering operation of the washing machine, and for transmitting a rotational force of the induction motor 51 to the inner tub 31 with a rotational speed identical to the rotational speed of the induction motor 51 in the dehydrating operation of the washing machine; and a control unit (not shown) for controlling the rotation transmission means 50 automatically according to the laundering operation and the dehydrating operation of the washing machine.

As depicted in Fig.3, the rotation transmission means 50 includes a connecting shaft 57 connected with the rotor 54 by a connecting link 53 to be rotated co-axially with the rotational center of the rotor 54; a sun gear 49 installed on an end of the connecting shaft 57; a ring gear 42 which is arranged to have a certain interval with an outer circumference of the sun gear 49 and has inscribed tooth 43 on an inner circumference thereof; a plurality of planetary gears 47 arranged between the sun gear 49 and the ring gear 42 to be meshed with the sun gear 49 and the ring gear 42 respectively; a planetary carrier 45 connected with the plural planetary gears 47 to be rotated with the planetary gears 47 when the planetary gears 47 revolve centering around the sun gear 49; a hollow-shaped first rotary shaft 33 connected to the ring gear 42, supported to the outer tub 21 by a bearing 26 and fixed to the inner tub 31 in order to transmit the rotational force of the ring gear 42 to the inner tub 31; a second rotary shaft 35 disposed inside the first rotary shaft 33 to be rotated relatively to the first rotary shaft 33 and connected to the planetary carrier 45 to rotate in the revolving direction of the planetary gears 47, namely, in the rotating direction of the planetary carrier 45; and a clutching device for transmitting the rotational force of the induction motor 51 only to the connecting shaft 57 or to the connecting shaft 57 and the ring gear 42 simultaneously.

The clutching device includes a first spline shaft 56 formed at a side of the connecting shaft 57; a second spline shaft 44 extended from a side of the ring gear 42 toward the first spline shaft 56 of the connecting shaft 57; a clutch 61 having a gear tooth 62 meshed with the first spline shaft 56 of the connecting shaft 57 and the second spline shaft 44 of the ring gear 42 and transmitting/cutting off the rotational force of the connecting shaft 57 to the ring gear 42 selectively while moving between the first spline shaft 56 and the second spline shaft 44; and a clutch driving unit 71 having a solenoid 72 disposed at a side of the clutch 61 to move the clutch 61 in a certain direction when an external power is applied thereto and a return spring 74 for returning the clutch into an initial position when the external power supply to the solenoid 72 is cut off, for rotating operating the clutch 61 according to the laundering operation and the dehydrating operation of the washing machine while being controlled by the control unit.

The operation of the washing machine in accordance with the first embodiment of the present invention will be described. The inner tub 31 is rotated at a rotational speed lower than that of the induction motor 51 in the laundering operation, and the inner tub 31 is rotated at a rotational speed same to that of the induction motor 51 in the dehydrating operation. The rotational force transmitting mechanism will be described in detail.

First, in the laundering operation of the washing machine, the clutch driving unit 71 is operated by the control unit, while the clutch 61 is moved, the connection of the first spline shaft 56 of the connecting shaft 57 and the second spline shaft 44 of the ring gear 42 is declutched. And, when the induction motor 51 is operated, the rotor 54 of the induction motor 51 is rotated, and the rotational force of the rotor 54 is transmitted to the connecting shaft 57 through the connecting link 53. Herein, the rotational force is not transmitted to the ring gear 42.

And, when the sun gear 49 installed at the end of the connecting shaft 57 is rotated, by the rotation of the sun gear 49, the planetary gears 47 meshed with the sun gear 49 are rotated in a direction opposite to the rotational direction of the sun gear 49, simultaneously, the planetary gears 47 are revolved in the same direction with the rotational direction of the sun gear 49 centering around the sun gear 49. And, by the rotation of the planetary gears 47, the ring gear 42 is rotated in a direction opposite to the rotational direction of the sun gear 49, namely, the same direction with the rotational direction of the planetary gears 47. Herein, the ring gear 42 is rotated at a speed lower than a rotational speed of the sun gear 49.

Accordingly, the first rotary shaft 33 connected to the ring gear 42 is rotated at a rotational speed lower than that of the induction motor 51, by the rotation of the first rotary shaft 33, the inner tub 31 is rotated, and accordingly the laundering operation of the laundry contained in the inner tub 31 is performed.

Herein, the second rotary shaft 35 connected with the planetary gears 47 through the planetary carrier 45 is rotated inside the first rotary shaft 33 without restriction.

In the meantime, in the dehydrating operation of the washing machine, by the control unit, the clutch driving unit 71 is operated, while the clutch 61 is moved, the first spline shaft 56 of the connecting shaft 57 is clutched with the second spline shaft 44 of the ring gear 42. And, when the induction motor 51 is operated, the rotor 54 of the induction motor 51 is rotated, and the rotational force of the rotor 54 is simultaneously transmitted to the connecting shaft 57 and the ring gear 42 through the connecting link 53. Accordingly, the connecting shaft 57 and the ring gear 42 are rotated as one body. In addition, the sun gear 49, the planetary gears 47, the planetary carrier 45 and the second rotary shaft 35 are rotated as one body with the connecting shaft 57 and the ring gear 42. The first rotary shaft 33 connected to the ring gear 42 is rotated in a direction and at a rotational speed same with those of the induction motor 51, by the rotation of the first rotary shaft 33, the inner tub 31 is rotated at a high speed, and accordingly the dehydrating operation of the laundry contained in the inner tub 31 is performed.

In the washing machine in accordance with the first embodiment of the present invention, by using the induction motor as a driving motor for rotating the inner tub and including the rotation transmission means for adjusting a rotational speed of the induction motor according to the laundering operation and the dehydrating operation of the washing machine and transmitting it to the inner tub, the induction motor which is comparatively low-priced and has little noise can be efficiently applied to the washing machine.

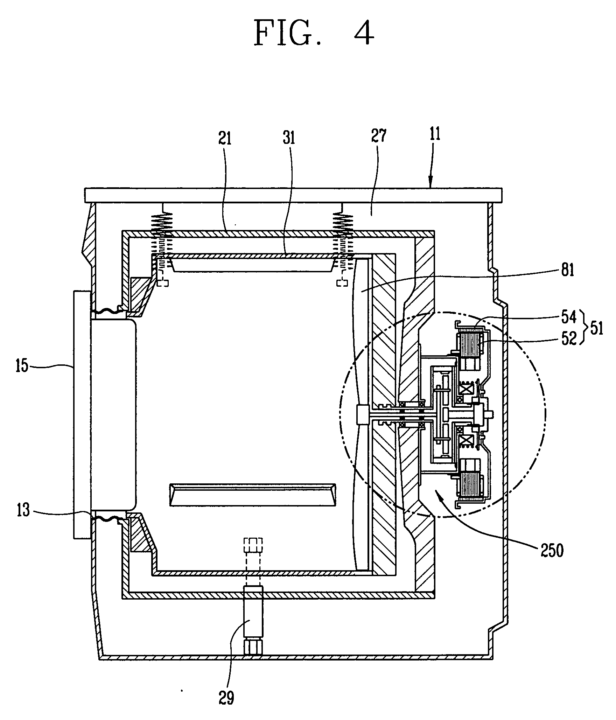

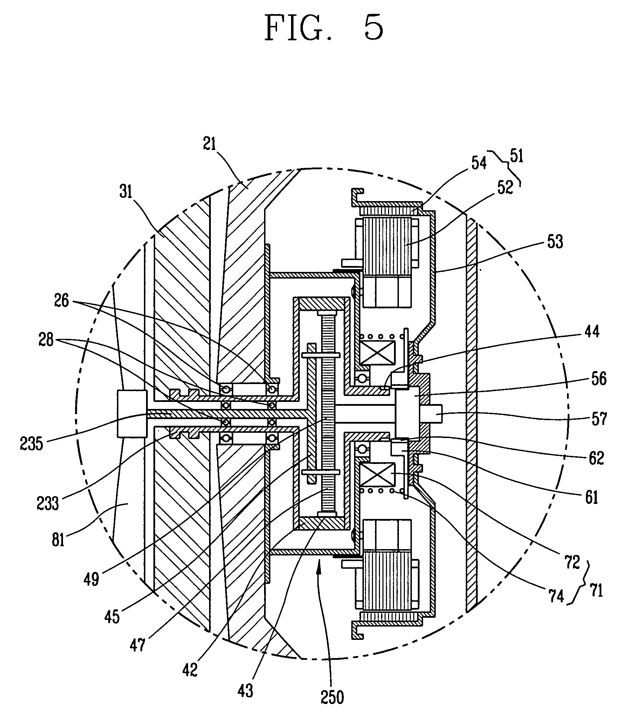

Hereinafter, a washing machine in accordance with a second embodiment of the present invention will be described with reference to Figs.4 and 5. Hereinafter, parts same with those of the first embodiment will have the same reference numerals.

As depicted in Fig.4, the washing machine in accordance with the second embodiment of the present invention includes a casing 11 in which an internal receiving space is formed and a door 15 is installed at an opening portion 13 on the front; an outer tub 21 suspended and supported by a spring 27 and a damper 29 in the casing 11 to contain wash water therein; an inner tub 31 rotatably disposed in the outer tub 21 to contain the laundry therein; a pulsator 81 rotatably fixed inside the inner tub 31 to perform agitating operation of wash water and the laundry contained in the inner tub 31 while being rotated in the laundering operation of the washing machine; an induction motor 51 which is disposed in the casing 11 and consists of a stator 52 and a rotor 54 disposed so as to maintain a certain air gap from the outer circumference of the stator 52, and generate a rotational force for rotating the inner tube 31 by mutual electromagnetic operation with the stator 52; a rotation transmission means 250 for transmitting a rotational force of the induction motor 51 to the inner tub 31 and the pulsator 81 so that the inner tub 31 and the pulsator 81 are rotated in the opposition direction to each other with a rotational speed decelerated from a rotational speed of the induction motor 51 in the laundering operation of the washing machine, and for transmitting a rotational force of the induction motor 51 to the inner tub 31 and the pulsator 81 so that the inner tube 31 and the pulsator 81 are rotated in the identical direction to each other with a rotational speed identical to the rotational speed of the induction motor in the dehydrating operation of the washing machine; and a control unit (not shown) for controlling the rotation transmission means 250 automatically according to the laundering operation and the dehydrating operation of the washing machine.

As depicted in Fig.5, the rotation transmission means 50 includes a connecting shaft 57 connected with the rotor 54 by a connecting link 53 so as to be rotated co-axially with the rotational center of the rotor 54; a sun gear 49 installed on an end of the connecting shaft 57; a ring gear 42 which is arranged to have a certain interval from an outer circumference of the sun gear 49 and has inscribed tooth 43 on an inner circumference thereof; a plurality of planetary gears 47 arranged between the sun gear 49 and the ring gear 42 to be meshed with the sun gear 49 and the ring gear 42 respectively; a planetary carrier 45 connected with the plural planetary gears 47 to be rotated with the planetary gears 47 when the planetary gears 47 revolve centering around the sun gear 49; a hollow-shaped first rotary shaft 233 connected to the ring gear 42, supported to the outer tub 21 by a bearing 26 and fixed to the inner tub 31 in order to transmit the rotational force of the ring gear 42 to the inner tub 31; a second rotary shaft 235 supported to the first rotary shaft 233 by a bearing 28 in the first rotary shaft 233 so as to be rotated relatively to the first rotary shaft 233 and connected with the pulsator 81 and the planetary carrier 45 so as to transmit the rotational force of the planetary carrier 45 to the pulsator 81; and a clutching device for transmitting the rotational force of the induction motor 51 only to the connecting shaft 57 or to the connecting shaft 57 and the ring gear 42 simultaneously.

The clutching device includes a first spline shaft 56 formed at a side of the connecting shaft 57; a second spline shaft 44 extended from a side of the ring gear 42 toward the first spline shaft 56 of the connecting shaft 57; a clutch 61 having a gear tooth 62 meshed with the first spline shaft 56 of the connecting shaft 57 and the second spline shaft 44 of the ring gear 42 and transmitting/cutting off the rotational force of the connecting shaft 57 to the ring gear 42 selectively while moving between the first spline shaft 56 and the second spline shaft 44; and a clutch driving unit 71 having a solenoid 72 disposed at a side of the clutch 61 to move the clutch 61 in a certain direction when external power is applied and a return spring 74 for returning the clutch into an initial position when the external power supply to the solenoid 72 is cut off, for rotating operating the clutch 61 according to the laundering operation and the dehydrating operation of the washing machine while being controlled by the control unit.

The operation of the washing machine in accordance with the second embodiment of the present invention will be described. In the laundering operation of the washing machine, the inner tub 31 is rotated at a rotational speed lower than that of the induction motor 51, herein, the pulsator 81 performs agitating operation of the laundry and wash water while being rotated in a direction opposite to the rotational direction of the inner tub 31 at a rotational speed lower than that of the induction motor 51. Herein, in the dehydrating operation of the washing machine, the inner tub 31 and the pulsator 81 are rotated as one body at the same speed with the rotational speed of the induction motor 51. The rotational force transmitting mechanism will be described in detail.

First, in the laundering operation of the washing machine, the clutch driving unit 71 is operated by the control unit, while the clutch 61 is moved, the connection of the first spline shaft 56 of the connecting shaft 57 and the second spline shaft 44 of the ring gear 42 is declutched. And, when the induction motor 51 is operated, the rotor 54 of the induction motor 51 is rotated, and the rotational force of the rotor 54 is transmitted to the connecting shaft 57 through the connecting link 53. Herein, the rotational force is not transmitted to the ring gear 42.

And, when the sun gear 49 installed at the end of the connecting shaft 57 is rotated, by the rotation of the sun gear 49, the planetary gears 47 meshed with the sun gear 49 are rotated in a direction opposite to the rotational direction of the sun gear 49, simultaneously, the planetary gears 47 are revolved in the same direction with the rotational direction of the sun gear 49 centering around the sun gear 49. And, by the rotation of the planetary gears 47, the ring gear 42 is rotated in a direction opposite to the rotational direction of the sun gear 49, namely, the same direction with the rotational direction of the planetary gears 47. Herein, the ring gear 42 is rotated at a speed lower than a rotational speed of the sun gear 49.

Accordingly, the first rotary shaft 233 connected to the ring gear 42 is rotated at a rotational speed lower than that of the induction motor 51 by the rotation of the first rotary shaft 233, the inner tub 31 is rotated, and accordingly the laundering operation of the laundry contained in the inner tub 31 is performed

Herein, the second rotary shaft 235 connected to the planetary carrier 45 is rotated in the revolving direction of the planetary gears 47, namely the same direction with the rotational direction of the sun gear 49 and is rotated in the opposite direction to the rotational direction of the ring gear 42. And, by the rotation of the planetary carrier 45, the pulsator 81 connected to the second rotary shaft 235 is rotated and performs agitating operation of the laundry contained in the inner tub 31 and wash water. Herein, the inner tub 31 and the pulsator 81 perform the laundering operation while being rotated in the opposite direction to each other.

In the meantime, in the dehydrating operation of the washing machine, by the control unit, the clutch driving unit 71 is operated, while the clutch 61 is moved, the first spline shaft 56 of the connecting shaft 57 is clutched with the second spline shaft 44 of the ring gear 42. And, when the induction motor 51 is operated, the rotor 54 of the induction motor 51 is rotated, and the rotational force of the rotor 54 is simultaneously transmitted to the connecting shaft 57 and the ring gear 42 through the connecting link 53. Accordingly, the connecting shaft 57, the ring gear 42 and the planetary carrier 45 are rotated as one body. Accordingly, the first rotary shaft 233 and the second rotary shaft 235 respectively connected with the ring gear 42 and the planetary carrier 45 are rotated in the same direction at the same rotational speed with the induction motor 51. By the rotation of the first and second rotary shafts 233, 235, the inner tub 31 and the pulsator 81 are rotated as one body, and accordingly dehydration of the laundry contained in the inner tub 31 can be performed.

In the washing machine in accordance with the second embodiment of the present invention, by using the induction motor as a driving motor for rotating the inner tub and including the rotation transmission means for adjusting a rotational speed of the induction motor according to the laundering operation and the dehydrating operation of the washing machine and transmitting it to the inner tub, the induction motor which is comparatively low-priced and has little noise can be efficiently applied to the washing machine.

In addition, by the rotation transmission means, in the laundering operation of the washing machine, the inner tub and the pulsator are rotated in the opposite direction to each other, efficiency of the agitating operation of the laundry and wash water is increased, and accordingly performance of the washing machine can be improved.

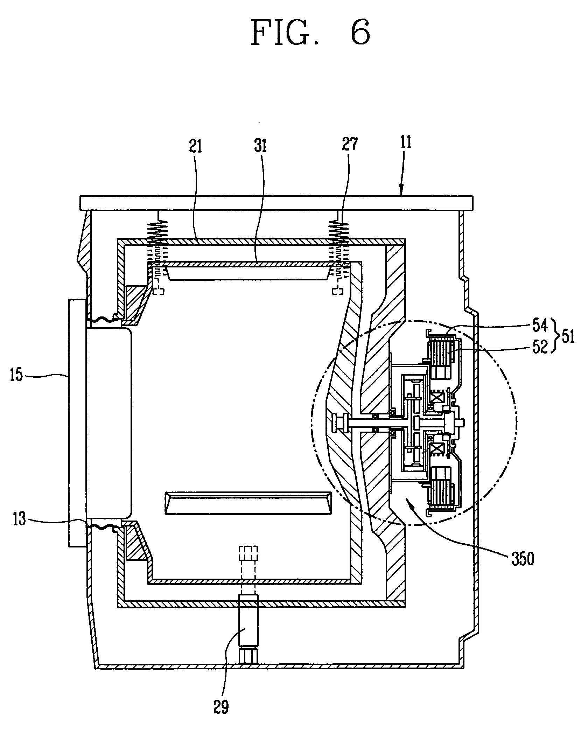

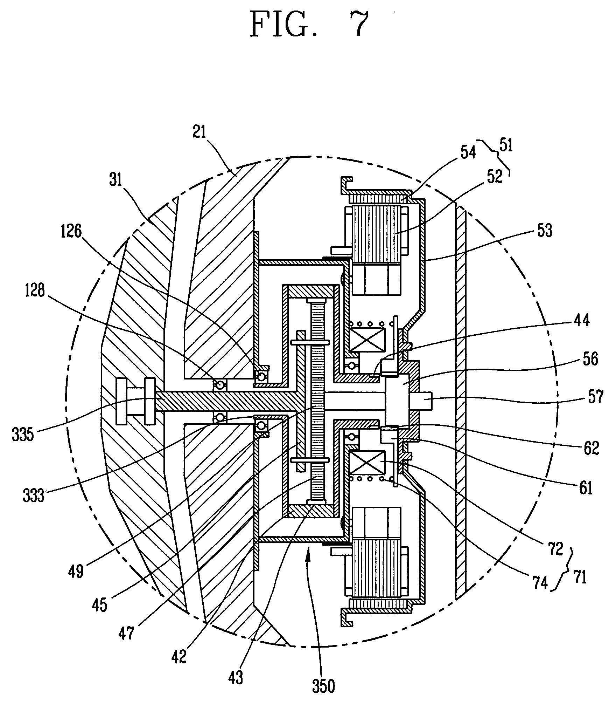

Hereinafter, a washing machine in accordance with a third embodiment of the present invention will be described with reference to Figs.6 and 7. Hereinafter, parts same with those of the above-mentioned embodiments will have the same reference numerals.

As depicted in Fig.6, the washing machine in accordance with the third embodiment of the present invention includes a casing 11 in which an internal receiving space is formed and a door 15 is installed at an opening portion 13 on the front; an outer tub 21 suspended and supported by a spring 27 and a damper 29 in the casing 11 to contain wash water therein; an inner tub 31 rotatably disposed in the outer tub 21 to contain the laundry therein; an induction motor 51 which is disposed in the casing 11 and consists of a stator 52 and a rotor 54 disposed to maintain a certain air gap from an outer circumference of the stator 52 and generate a rotational force for rotating the inner tub 31 by mutual electromagnetic operation with the stator 52; a rotation transmission means 350 for transmitting a rotational force of the induction motor 51 to the inner tub 31 at a decelerated speed in comparison with a rotational speed of the inductor motor 51 in the laundering operation of the washing machine, and for transmitting a rotational force of the induction motor 51 to the inner tub 31 at a speed same with a rotational speed of the inductor motor 51 in the dehydrating operation of the washing machine; and a control unit (not shown) for controlling the rotation transmission means 350 automatically according to the laundering operation and the dehydrating operation of the washing machine.

As depicted in Fig.7, the rotation transmission means 350 includes a connecting shaft 57 connected with the rotor 54 by a connecting link 53 to be rotated co-axially with the rotational center of the rotor 54; a sun gear 49 installed at an end of the connecting shaft 57; a ring gear 42 which is arranged to have a certain interval from the outer circumference of the sun gear 49 and has inscribed tooth 43 on the inner circumference; plural planetary gears 47 arranged between the sun gear 49 and the ring gear 42 to be meshed with the sun gear 49 and the ring gear 42 respectively; a planetary carrier 45 connected with the plural planetary gears 47 to be rotated with the planetary gears 47 when the planetary gears 47 revolve centering around the sun gear 49; a hollow-shaped first rotary shaft 333 connected to the ring gear 42 and supported to the outer tub 21 by a bearing 126; a second rotary shaft 335 supported to the outer tub 21 by a bearing 128, disposed to be rotated relatively to the first rotary shaft 33, and connected with the inner tub 31 and planetary carrier 45 to transmit the rotational force of the planetary carrier 45 to the inner tub 31; and a clutching device for transmitting the rotational force of the induction motor 51 only to the connecting shaft 57 or to the connecting shaft 57 and the ring gear 42 simultaneously.

The clutching device includes a first spline shaft 56 formed at a side of the connecting shaft 57; a second spline shaft 44 extended from a side of the ring gear 42 to the first spline shaft 56 of the connecting shaft 57; a clutch 61 having a gear tooth 62 meshed with the first spline shaft 56 of the connecting shaft 57 and the second spline shaft 44 of the ring gear 42 and transmitting/cutting off the rotational force of the connecting shaft 57 to the ring gear 42 selectively while moving between the first spline shaft 56 and the second spline shaft 44; and a clutch driving unit 71 having a solenoid 72 disposed at a side of the clutch 61 to move the clutch 61 in a certain direction when external power is applied and a return spring 74 for returning the clutch into an initial position when the external power supply to the solenoid 72 is cut off, for rotating operating the clutch 61 according to the laundering operation and the dehydrating operation of the washing machine while being controlled by the control unit.

The operation of the washing machine in accordance with the third embodiment of the present invention will be described. Unlike the first embodiment, in the washing machine in accordance with the third embodiment of the present invention, the first rotary shaft 333 connected to the ring gear 42 is rotated as a free end, and the second rotary shaft 335 connected to the planetary carrier 45 is connected to the inner tub 31. Accordingly, the inner tub 31 is rotated in the same direction with the rotational direction of the induction motor 51 at a decelerated speed. The rotational transmitting mechanism will be described in detail.

First, in the laundering operation of the washing machine, the clutch driving unit 71 is operated by the control unit, while the clutch 61 is moved, the connection of the first spline shaft 56 of the connecting shaft 57 and the second spline shaft 44 of the ring gear 42 is declutched. And, when the induction motor 51 is operated, the rotor 54 of the induction motor 51 is rotated, and the rotational force of the rotor 54 is transmitted to the connecting shaft 57 through the connecting link 53. Herein, the rotational force is not transmitted to the ring gear 42.

And, when the sun gear 49 installed at the end of the connecting shaft 57 is rotated, by the rotation of the sun gear 49, the planetary gears 47 meshed with the sun gear 49 are rotated in a direction opposite to the rotational direction of the sun gear 49, simultaneously, the planetary gears 47 are revolved in the same direction with the rotational direction of the sun gear 49 centering around the sun gear 49. And, by the rotation of the planetary gears 47, the ring gear 42 is rotated in a direction opposite to the rotational direction of the sun gear 49, namely, the same direction with the rotational direction of the planetary gears 47. In addition, the planetary carrier 45 is rotated in the same direction with the rotational direction of the sun gear 49 by the revolution of the planetary gears 47. Herein, the ring gear 42 and the planetary carrier 45 are rotated at a speed lower than a rotational speed of the sun gear 49.

Accordingly, the first rotary shaft 333 connected to the ring gear 42 is rotated at a rotational speed lower than that of the induction motor 51 without restriction, and the second rotary shaft 335 connected to the planetary carrier 45 is rotated by the rotation of the planetary carrier 45. And, by the rotation of the second rotary shaft 335, the inner tub 31 is rotated, and accordingly the laundering operation of the laundry contained in the inner tub 31 is performed.

In the meantime, in the dehydrating operation of the washing machine, by the control unit, the clutch driving unit 71 is operated, while the clutch 61 is moved, the first spline shaft 56 of the connecting shaft 57 is clutched with the second spline shaft 44 of the ring gear 42. And, when the induction motor 51 is operated, the rotor 54 of the induction motor 51 is rotated, and the rotational force of the rotor 54 is simultaneously transmitted to the connecting shaft 57 and the ring gear 42 through the connecting link 53. Accordingly, the connecting shaft 57 and the ring gear 42 are rotated as one body. In addition, the sun gear 49, the planetary gears 47, the planetary carrier 45 and the second rotary shaft 335 are rotated as one body with the connecting shaft 57 and the ring gear 42. Accordingly, the first rotary shaft 333 and the second rotary shaft 335 respectively connected to the ring gear 42 and the planetary carrier 45 are rotated in a direction and at a rotational speed same with those of the induction motor 51, by the rotation of the second rotary shaft 335, the inner tub 31 is rotated at a high speed, and accordingly the dehydrating operation of the laundry contained in the inner tub 31 is performed.

Advantages of the washing machine in accordance with the third embodiment of the present invention are the same with those of the above-mentioned embodiments.

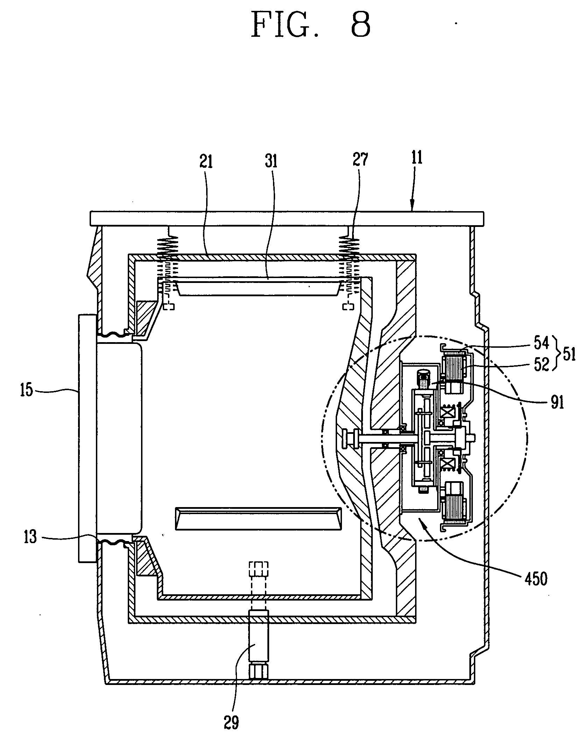

Hereinafter, a washing machine in accordance with a fourth embodiment of the present invention will be described with reference to Figs.8 through 10. Hereinafter, parts same with those of the above-mentioned embodiments will have the same reference numerals.

As depicted in Fig.8, the washing machine in accordance with the fourth embodiment of the present invention includes a casing 11 in which an internal receiving space is formed and a door 15 is installed at an opening portion 13 on the front; an outer tub 21 suspended and supported by a spring 27 and a damper 29 in the casing 11 to contain wash water therein; an inner tub 31 rotatably disposed in the outer tub 21 to contain the laundry therein; an induction motor 51 which is disposed in the casing 11 and consists of a stator 52 and a rotor 54 disposed so as to maintain a certain air gap from the outer circumference of the stator 52 and generate a rotational force for rotating the inner tub 31 by mutual electromagnetic operation with the stator 52; a rotation transmission means 450 for transmitting a rotational force of the induction motor 51 to the inner tub 31 at a decelerated speed in comparison with a rotational speed of the inductor motor 51 in the laundering operation of the washing machine and transmitting a rotational force of the induction motor 51 to the inner tub 31 at a speed same with a rotational speed of the inductor motor 51 in the dehydrating operation of the washing machine; a speed adjusting device 91 for adjusting a rotational speed deceleration quantity of the rotation transmission means 450 in the laundering operation of the washing machine; and a control unit (not shown) for controlling the rotation transmission means 250 and the speed adjusting device 91 automatically according to the laundering operation and the dehydrating operation of the washing machine.

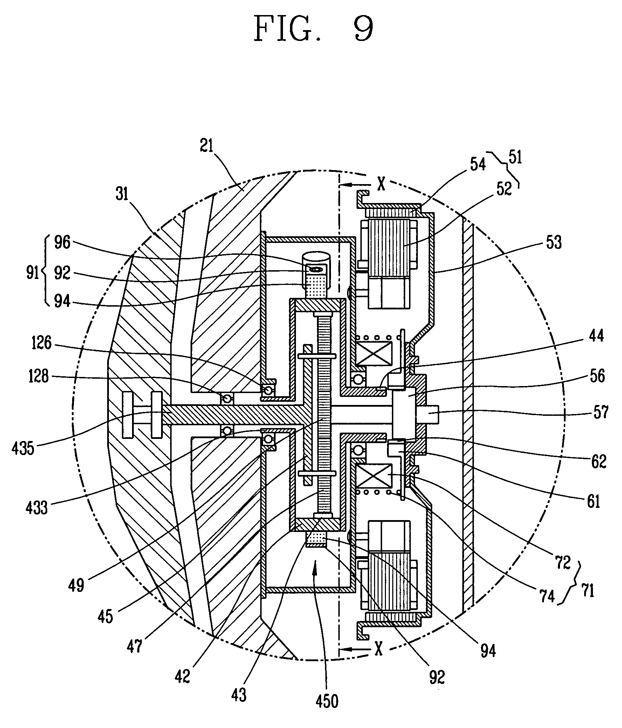

As depicted in Fig.9, the rotation transmission means 450 includes a connecting shaft 57 connected with the rotor 54 by a connecting link 53 to be rotated co-axially with the rotational center of the rotor 54; a sun gear 49 installed on an end of the connecting shaft 57; a ring gear 42 which is arranged to have a certain interval from the outer circumference of the sun gear 49 and has inscribed tooth 43 on the inner circumference; plural planetary gears 47 arranged between the sun gear 49 and the ring gear 42 to be meshed with the sun gear 49 and the ring gear 42 respectively; a planetary carrier 45 connected to the plural planetary gears 47 to be rotated with the planetary gears 47 when the planetary gears 47 revolve centering around the sun gear 49; a hollow-shaped first rotary shaft 433 connected to the ring gear 42 and supported to the outer tub 21 by a bearing 126; a second rotary shaft 235 supported to the outer tub 21 by a bearing 128, disposed so as to be relatively rotated to the first rotary shaft 433 and connected to the inner tub 31 and the planetary carrier 45 to transmit the rotational force of the planetary carrier 45 to the inner tub 31; and a clutching device for transmitting the rotational force of the induction motor 51 only to the connecting shaft 57 or to the connecting shaft 57 and the ring gear 42 simultaneously.

The clutching device includes a first spline shaft 56 formed at a side of the connecting shaft 57; a second spline shaft 44 extended from a side of the ring gear 42 toward the first spline shaft 56 of the connecting shaft 57; a clutch 61 having a gear tooth 62 meshed with the first spline shaft 56 of the connecting shaft 57 and the second spline shaft 44 of the ring gear 42 and selectively transmitting or cutting off the rotational force of the connecting shaft 57 to the ring gear 42 while moving between the first spline shaft 56 and the second spline shaft 44; and a clutch driving unit 71 having a solenoid 72 disposed at a side of the clutch 61 to move the clutch 61 in a certain direction when external power is applied and a return spring 74 for returning the clutch into an initial position when the external power supply to the solenoid 72 is cut off, for operating the clutch 61 according to the laundering operation and the dehydrating operation of the washing machine while being controlled by the control unit.

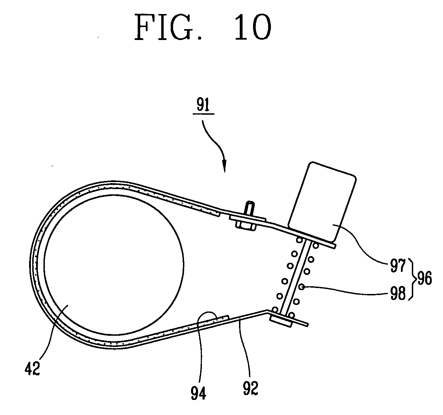

As depicted in Fig.10, the speed adjusting device 91 includes a band 92 wound around the outer circumference of the ring gear 42; and a band driving unit 96 disposed at a side of the band 92 to provide tension to the band 92 in order to make the band 92 approach to or be separated from the outer circumference of the ring gear 42.

The band driving unit 96 consists of a solenoid 97 fixed to both ends of the band 92 so as to act power for making both ends of the band 92 approach each other in external power supply; and a return spring 98 for returning the band 92 into an initial state when external power supply to the solenoid 97 is cut off. The band driving unit 96 adjusts a rotational speed of the second rotary shaft 435 connected to the planetary carrier 45 by braking or releasing the ring gear 42 while adjusting a frictional force between the band 92 and the outer circumference of the ring gear 42.

In the meantime, in order to increase a frictional force when the band 92 is contacted to the outer circumference of the ring gear 42, it is preferable to install a frictional member 94 on the inner circumference of the band 92.

The operation of the washing machine in accordance with the fourth embodiment of the present invention will be described.

First, in the laundering operation of the washing machine, the clutch driving unit 71 is operated by the control unit, while the clutch 61 is moved, the connection of the first spline shaft 56 of the connecting shaft 57 and the second spline shaft 44 of the ring gear 42 is declutched. And, when the induction motor 51 is operated, the rotor 54 of the induction motor 51 is rotated, and the rotational force of the rotor 54 is transmitted to the connecting shaft 57 through the connecting link 53. Herein, the rotational force is not transmitted to the ring gear 42.

And, when the sun gear 49 installed at the end of the connecting shaft 57 is rotated, by the rotation of the sun gear 49, the planetary gears 47 meshed with the sun gear 49 are rotated in a direction opposite to the rotational direction of the sun gear 49, simultaneously, the planetary gears 47 are revolved in the same direction with the rotational direction of the sun gear 49 centering around the sun gear 49. And, by the rotation of the planetary gears 47, the ring gear 42 is rotated in a direction opposite to the rotational direction of the sun gear 49, namely, the same direction with the rotational direction of the planetary gears 47. In addition, the planetary carrier 45 is rotated in the same direction of the rotational direction of the sun gear 49 by the revolution of the planetary gears 47. Herein, the ring gear 42 and the planetary carrier 45 are rotated at a speed lower than a rotational speed of the sun gear 49.

Accordingly, the first rotary shaft 433 connected to the ring gear 42 is rotated at a rotational speed lower than that of the induction motor 51 without restriction, and the second rotary shaft 435 connected to the planetary carrier 45 is rotated by the rotation of the planetary carrier 45. And, by the rotation of the second rotary shaft 435, the inner tub 31 is rotated, and accordingly the laundering operation of the laundry contained in the inner tub 31 is performed

Herein, the control unit operates the band driving unit 96 of the speed adjusting device 91, by the operation of the band driving unit 96, a frictional force between the band 92 and the ring gear 42 is adjusted, and accordingly braking or releasing of rotation of the ring gear 42 is performed. According to that, a rotational speed of the second rotary shaft 43 connected to the planetary carrier 45 is adjusted. In more detail, when a frictional force between the band 92 and the outer circumference of the ring gear 42 is increased, a rotational force of the second rotary shaft 435 is increased, when the ring gear 42 is stopped, a rotational force of the second rotary shaft 435 is maximum.

In the meantime, in the dehydrating operation of the washing machine, by the control unit, the clutch driving unit 71 is operated, while the clutch 61 is moved, the first spline shaft 56 of the connecting shaft 57 is clutched with the second spline shaft 44 of the ring gear 42. And, when the induction motor 51 is operated, the rotor 54 of the induction motor 51 is rotated, and the rotational force of the rotor 54 is simultaneously transmitted to the connecting shaft 57 and the ring gear 42 through the connecting link 53. Accordingly, the connecting shaft 57 and the ring gear 42 are rotated as one body. In addition, the sun gear 49, the planetary gears 47, the planetary carrier 45 and the second rotary shaft 35 are rotated as one body with the connecting shaft 57 and the ring gear 42. Accordingly, the first rotary shaft 433 and the second rotary shaft 435 respectively connected to the ring gear 42 and the planetary carrier 45 are rotated in a direction and at a rotational speed same with those of the induction motor 51, by the rotation of the second rotary shaft 435, the inner tub 31 is rotated at a high speed, and accordingly the dehydrating operation of the laundry contained in the inner tub 31 is performed. Herein, the control unit makes the band 92 and the outer circumference of the ring gear 42 be separated by operating the band driving unit 96 of the speed adjusting device 91.

In the washing machine in accordance with the fourth embodiment of the present invention, by using the induction motor as a driving motor for rotating the inner tub and including the rotation transmission means for adjusting a rotational speed of the induction motor according to the laundering operation and the dehydrating operation of the washing machine and transmitting it to the inner tub, the induction motor which is comparatively low-priced and has little noise can be efficiently applied to the washing machine.

In addition, in the washing machine in accordance with the fourth embodiment of the present invention, by including the speed adjusting device for adjusting a rotational speed deceleration quantity of the rotation transmission means, it is possible to adjust a rotational speed of the inner tub.

## Claims

1. A washing machine, comprising:
a washing machine casing;
an outer tub disposed in the casing, for containing water therein;
an inner tub rotatably disposed in the outer tub, for containing laundry therein;
an induction motor for generating a rotational force; and
a rotation transmission means for transmitting a rotational force of the induction motor to the inner tub with a rotational speed decelerated from a rotational speed of the induction motor in laundering operation, and with a rotational speed identical to the rotational speed of the induction motor in dehydrating operation.

2. The washing machine of claim 1, wherein the rotation transmission means includes:
a sun gear rotated by the rotational force of the induction motor;
a ring gear arranged to have a certain interval from an outer circumference of the sun gear;
a planetary gear meshed with the outer circumference of the sun gear and an inner circumference of the ring gear;
a rotary shaft connected to the ring gear and fixed to the inner tub to transmit the rotational force of the ring gear to the inner tub; and
a clutching device for selectively transmitting the rotational force of the induction motor only to the sun gear or to the sun gear and the ring gear simultaneously.

3. The washing machine of claim 2, wherein the clutching device includes:
a first spline shaft formed on a circumference of a connecting shaft for connecting the sun gear with the induction motor;
a second spline shaft extended from a side of the ring gear toward the first spline shaft;
a clutch movably disposed between the first spline shaft and the second spline shaft and selectively meshed only with the first spline shaft or with the first spline shaft and the second spline shaft simultaneously; and
a clutch driving unit for moving the clutch.

4. The washing machine of claim 3, wherein the clutch driving unit includes:
a solenoid for moving the clutch in a certain direction when an external power supply is applied thereto; and
a return spring for returning the clutch into an initial position thereof when the external power supply to the solenoid is cut off.

5. The washing machine of claim 1, wherein the induction motor includes:
a stator; and
a rotor disposed to have a certain air gap from an outer circumference of the stator, for generating a rotational force by mutual electromagnetic operation with the stator.

6. The washing machine of claim 5, wherein the inner tub is rotated co-axially with a rotational center of the rotor.

7. The washing machine of claim 1, wherein the rotation transmission means includes:
a sun gear rotated by the rotational force of the induction motor;
a ring gear arranged to have a certain interval from an outer circumference of the sun gear;
a planetary gear meshed with the outer circumference of the sun gear and an inner circumference of the ring gear;
a planetary carrier connected to the planetary gear to be rotated by revolution of the planetary gear;
a rotary shaft connected to the planetary carrier and fixed to the inner tub to transmit the rotational force of the planetary carrier to the inner tub; and
a clutching device for selectively transmitting the rotational force of the induction motor only to the sun gear or to the sun gear and the ring gear simultaneously.

8. The washing machine of claim 7, wherein the clutching device includes:
a first spline shaft formed on a circumference of a connecting shaft for connecting the sun gear with the induction motor;
a second spline shaft extended from a side of the ring gear toward the first spline shaft;
a clutch movably disposed between the first spline shaft and the second spline shaft and selectively meshed only with the first spline shaft or with the first spline shaft and the second spline shaft simultaneously; and
a clutch driving unit for moving the clutch.

9. The washing machine of claim 8, wherein the clutch driving unit includes:
a solenoid for moving the clutch in a certain direction when external power supply is applied thereto; and
a return spring for returning the clutch into an initial position thereof when the external power supply to the solenoid is cut off.

10. The washing machine of claim 7, further comprising:
a speed adjusting device for controlling a rotational speed of the ring gear to adjust a rotational speed of the rotary shaft in laundering operation of the washing machine.

11. The washing machine of claim 10, wherein the speed adjusting device includes:
a band wound around an outer circumference of the ring gear; and
a band driving unit disposed at a side of the band to provide tension to the band, for selectively adjusting a frictional force between an inner circumference of the band and the outer circumference of the ring gear.

12. The washing machine of claim 11, wherein the band driving unit includes:
a solenoid fixed to both ends of the band to apply a force for making both ends of the band approach to each other when an external power supply is applied thereto; and
a return spring for returning the band into an initial state thereof when the external power supply to the solenoid is cut off.

13. A washing machine, comprising:
a washing machine casing;
an outer tub disposed in the casing, for containing water therein;
an inner tub rotatably disposed in the outer tub, for containing laundry therein;
an induction motor for generating a rotational force;
a pulsator disposed in the inner tub to perform agitating operation of the water and the laundry contained in the inner tub while being rotated; and
a rotation transmission means arranged between the inner tub and the induction motor, for transmitting a rotational force of the induction motor to the inner tub and the pulsator so that the inner tub and the pulsator are rotated in the opposite direction to each other with a rotational speed decelerated from a rotational speed of the induction motor in laundering operation, and for transmitting a rotational force of the induction motor to the inner tub and the pulsator so that the inner tub and the pulsator are rotated in the identical direction to each other with a rotational speed identical to the rotational speed of the induction motor in dehydrating operation.

14. The washing machine of claim 13, wherein the rotation transmission means includes:
a sun gear rotated by the rotational force of the induction motor;
a ring gear arranged to have a certain interval with an outer circumference of the sun gear;
a planetary gear meshed with the outer circumference of the sun gear and an inner circumference of the ring gear;
a planetary carrier connected to the planetary gear to be rotated by revolution of the planetary gear;
a hollow-shaped first rotary shaft connected to the ring gear and fixed to the inner tub to transmit the rotational force of the ring gear to the inner tub;
a second rotary shaft rotatably disposed inside the first rotary shaft, connected to the planetary carrier and fixed to the pulsator in order to transmit a rotational force of the planetary carrier to the pulsator; and
a clutching device for selectively transmitting the rotational force of the induction motor only to the sun gear or to the sun gear and the ring gear simultaneously.

15. The washing machine of claim 14, wherein the clutching device includes:
a first spline shaft formed on a circumference of a connecting shaft for connecting the sun gear with the induction motor;
a second spline shaft extended from a side of the ring gear toward the first spline shaft;
a clutch movably disposed between the first spline shaft and the second spline shaft and selectively meshed only with the first spline shaft or with the first spline shaft and the second spline shaft simultaneously; and
a clutch driving unit for moving the clutch.

16. The washing machine of claim 15, wherein the clutch driving unit includes:
a solenoid for moving the clutch in a certain direction when external power supply is applied thereto; and
a return spring for returning the clutch into an initial position when the external power supply to the solenoid is cut off.

17. The washing machine of claim 14, further comprising a speed adjusting device for controlling a rotational speed of the ring gear to adjust rotational speeds of the first and second rotary shafts in laundering operation of the washing machine.

18. The washing machine of claim 17, wherein the speed adjusting device includes:
a band wound around an outer circumference of the ring gear; and
a band driving unit disposed at a side of the band to provide tension to the band, for selectively adjusting a frictional force between an inner circumference of the band and the outer circumference of the ring gear.

19. The washing machine of claim 13, wherein the induction motor includes:
a stator; and
a rotor disposed to have a certain air gap from an outer circumference of the stator, for generating a rotational force by mutual electromagnetic operation with the stator.

20. The washing machine of claim 19, wherein the inner tub and the pulsator are rotated co-axially with a rotational center of the rotor.
